Europäisches Patentamt

European Patent Office

Office européen des brevets

(19)

(11) **EP 0 929 867 B1**

(12) **FASCICULE DE BREVET EUROPEEN**

(45) Date de publication et mention
de la délivrance du brevet:
**06.12.2000  Bulletin 2000/49**

(21) Numéro de dépôt: **97943020.4**

(22) Date de dépôt: **29.09.1997**

(51) Int Cl.⁷: $G06F\ 15/80$

(86) Numéro de dépôt international:
**PCT/FR97/01713**

(87) Numéro de publication internationale:
**WO 98/14892 (09.04.1998 Gazette 1998/14)**

(54) **PROCEDE D'APPRENTISSAGE POUR LA CLASSIFICATION DE DONNEES SELON DEUX CLASSES SEPAREES PAR UNE SURFACE SEPARATRICE D'ORDRE 1 OU 2**

**LERNVERFAHREN FÜR DIE KLASSIFIZIERUNG VON DURCH EINE TRENNFLÄCHE ERSTER ODER ZWEITER ORDNUNG IN ZWEI KLASSEN GETRENNTEN DATEN**

**METHOD FOR LEARNING DATA CLASSIFICATION IN TWO SEPARATE CLASSES SEPARATED BY A REGION DIVIDER OF ORDER 1 OR 2**

(84) Etats contractants désignés:
**DE GB**

(30) Priorité: **01.10.1996  FR 9611939**

(43) Date de publication de la demande:
**21.07.1999  Bulletin 1999/29**

(73) Titulaires:
- **COMMISSARIAT A L'ENERGIE ATOMIQUE
  75015 Paris (FR)**
- **CENTRE NATIONAL DE
  LA RECHERCHE SCIENTIFIQUE
  75794 Paris Cédex 16 (FR)**

(72) Inventeur: **GORDON, Mirta
F-38000 Grenoble (FR)**

(74) Mandataire: **Ilgart, Jean-Christophe et al
c/o Société Brevatome,
25, rue de Ponthieu
F-75008 Paris (FR)**

(56) Documents cités:
- **HUMPERT B K: "IMPROVING BACK
  PROPAGATION WITH A NEW ERROR
  FUNCTION" NEURAL NETWORKS, vol. 7, no. 8,
  1 janvier 1994, page 1191/1192 XP000476787**
- **SAERENS M: "A PRELIMINARY STUDY OF A
  COMPETITIVE COST FUNCTION APPLIED TO
  CLUSTERING" PROCEEDINGS OF THE
  INTERNATIONAL CONFERENCE ON NEURAL
  NETWORKS, PARIS, JULY 9 - 13, 1990, vol. 1, 9
  juillet 1990, INSTITUTE OF ELECTRICAL AND
  ELECTRONICS ENGINEERS, pages 318-321,
  XP000145295**

## Description

### Domaine technique

L'invention concerne un procédé pour apprendre à un neurone à classer des données en deux classes séparées par une surface séparatrice d'ordre 1, c'est-à-dire un hyperplan, ou par une surface séparatrice d'ordre 2, par exemple une hypersphère.

Cette invention trouve des applications dans les domaines exploitant les réseaux de neurones et, en particulier, pour le diagnostic médical, la reconnaissance de formes ou encore la classification d'objets ou de données comme des spectres, des signaux, etc.

### Etat de la technique

Les réseaux de neurones, ou réseaux neuronaux, sont des systèmes qui effectuent, sur des informations numériques, des calculs inspirés du comportement des neurones physiologiques. Un réseau neuronal doit donc apprendre à réaliser les tâches que l'on désire lui faire effectuer par la suite. Pour cela, on utilise une base d'exemples, ou base d'apprentissage, qui contient une série d'exemples connus utilisés pour apprendre au réseau de neurones à effectuer les tâches qu'il devra reproduire, par la suite, avec des informations inconnues.

Un réseau neuronal est composé d'un ensemble de neurones formels. Les neurones sont connectés les uns aux autres par des connexions qui ont chacune un poids synaptique. Chaque neurone (appelé aussi perceptron généralisé) est une unité de calcul constituée d'entrées et d'une sortie correspondant à un état. A chaque instant, l'état de chaque neurone, pondéré par le poids synaptique de la connexion correspondante, est communiqué aux autres neurones de l'ensemble. Le niveau total d'activation que le neurone reçoit, en entrée, est égal à la somme des états pondérés des autres neurones. A chaque instant, ce niveau d'activation est utilisé par ce neurone pour mettre à jour sa sortie.

Il existe actuellement plusieurs algorithmes d'apprentissage permettant d'apprendre à un neurone, destiné à être utilisé au sein d'un réseau de neurones, à effectuer une tâche précise, comme classer des données (ou motifs).

La qualité de ces algorithmes est jugée sous deux aspects différents et ceci suivant le type de tâche à réaliser. Un premier cas est celui où les exemples de l'ensemble d'apprentissage peuvent être tous appris par le neurone. Dans ce cas, l'algorithme doit être capable de trouver les poids qui classent correctement, non seulement, les exemples, mais aussi des motifs nouveaux, c'est-à-dire que le neurone doit avoir des poids capables de bien généraliser. Un deuxième cas est celui où il n'est pas possible au neurone d'apprendre tous les exemples. Alors, l'algorithme doit trouver les poids qui minimisent le nombre d'erreurs d'apprentissage. Or, il n'y a pas d'algorithme d'apprentissage qui donne les poids satisfaisants dans les deux cas décrits.

Un algorithme d'apprentissage d'un neurone est décrit dans le document « A thermal perceptron learning rule » de Marcus FREAN, dans Neural computation, n° 4, pages 946-957 (1992).

Cet algorithme permet de déterminer des poids, mais il ne donne pas la solution optimale au problème à résoudre. En conséquence, un tel algorithme ne minimise pas le nombre d'erreurs d'apprentissage et ne généralise pas optimalement.

Un autre algorithme d'apprentissage d'un neurone est décrit dans le document « Perceptron-based learning algorithms » de S. I. GALLANT, dans IEEE transaction on neural networks, vol. 1, n° 2, Juin 1990.

Cet algorithme permet d'obtenir de bons résultats dans le cas de neurones capables d'apprendre tous les exemples d'apprentissage, à condition d'attendre la convergence de l'algorithme. Cependant, dans le cas où l'ensemble d'apprentissage ne peut pas être appris par un seul neurone, cet algorithme ne converge pas. Il est donc impossible de savoir si l'algorithme ne "s'arrête pas" parce qu'il n'a pas trouvé de solution ou bien parce qu'on n'a pas suffisamment attendu.

### Exposé de l'invention

L'invention a justement pour but de résoudre les inconvénients des techniques proposées précédemment. A cette fin, elle propose un procédé ou algorithme qui converge quel que soit le cas rencontré et qui, de plus, présente des performances optimales. Autrement dit, l'invention propose un procédé permettant d'apprendre à un neurone à classer des données en deux classes séparées par une surface de séparation pouvant être soit linéaire, soit quadratique.

Par la suite, on parlera indifféremment de neurone ou de perceptron généralisé, neurone ou perceptron représentant des unités binaires. A titre indicatif, on peut noter, par exemple, qu'un perceptron linéaire est un neurone qui produit des surfaces de séparation linéaires.

L'invention concerne, de façon plus précise, un procédé pour apprendre à un neurone à fonction d'activation quadratique à classer des données selon deux classes distinctes séparées par une surface séparatrice, ce neurone étant un neurone binaire ayant N connexions provenant de l'entrée et recevant en entrée N nombres représentant une donnée, ou motif, destinée à être classée en utilisant une base d'apprentissage contenant une pluralité de données connues, chaque entrée du neurone étant affectée par le poids ($w_i$) de la connexion correspondante, caractérisé en ce qu'il comporte les étapes suivantes :

a) définition d'une fonction coût C en déterminant, pour chaque neurone et en fonction d'un paramètre descriptif de la surface séparatrice, une stabilité $\gamma^\mu$ de chaque donnée $\mu$ de la base d'apprentissage, la fonction coût étant la somme de tous les coûts déterminés pour toutes les données de la base d'apprentissage avec :

$$C_\sigma = \sum_{\mu=1}^{P} \left[ A - B\tanh\frac{\sigma\gamma^\mu}{2T+} \right] + \sum_{\mu=1}^{P} \left[ A - B\tanh\frac{\sigma\gamma^\mu}{2T-} \right]$$
$$(\gamma^\mu > o) \qquad\qquad (\gamma^\mu \leq 0)$$

où A est quelconque, B est un réel positif quelconque, P est le nombre de données de la base d'apprentissage, $\gamma^\mu$ est la stabilité de la donnée $\mu$ ; T+ et T- sont deux paramètres de la fonction coût (appelés "températures" ) ; $\sigma$ prend la valeur +1 si on a choisi que $\gamma^\mu > 0$ correspond à une classification correcte et $\gamma^\mu < 0$ incorrecte ou la valeur -1 dans le cas contraire.

b) initialisation des poids $w_i$, des rayons $r_i$, des paramètres T+ et T-, avec T+ < T-, d'un taux d'apprentissage $\varepsilon$ et de vitesses de recuit $\delta T+$ et $\delta T-$ ;

c) minimisation, par rapport aux poids des connexions $W_i$ et aux rayons, de la fonction coût C par itérations successives au cours desquelles les paramètres T+ et T- décroissent suivant les vitesses de recuit $\delta T+$ et $\delta T-$ jusqu'à un critère d'arrêt prédéfini ;

d) obtention des valeurs des poids des connexions et des rayons du neurone.

Ces valeurs des poids de connexions et des rayons sont, par exemple, affichés sur un écran, 'enregistrés dans des fichiers informatiques.

Selon un mode de réalisation de l'invention, la stabilité de chaque donnée est :

$$\gamma^\mu = y^\mu \ln\left[ \sum_{i=1}^{N} \frac{(w_i - x^\mu_i)^2}{r_i^2} \right],$$

avec y = +1 ou -1, et

où $\mu$ est l'étiquette du motif, $x^\mu_i$ est la valeur du motif $\mu$ pour la ième entrée, $y^\mu$ est la classe du motif $\mu$, N est le nombre d'entrées et de connexions du neurone, $w_i$ est le poids de la connexion entre l'entrée i et le neurone et $r_i$ est le paramètre de rayon pour la i-ème entrée.

Selon un autre mode de réalisation de l'invention, la stabilité de chaque donnée est

$$\gamma^\mu = y^\mu \left[ \sum_{i=1}^{N} [(w_i - x^\mu_i)^2 - r_i^2] \right]$$

avec y = +1 ou -1, et

où $\mu$ est l'étiquette du motif, $x^\mu_i$ est la valeur du motif $\mu$ pour la ième entrée, $y^\mu$ est la classe du motif $\mu$, N est le nombre d'entrées et de connexions du neurone, $w_i$ est le poids de la connexion entre l'entrée i et le neurone et $r_i$ est le paramètre de rayon pour la i-ème entrée.

Brève description des figures

- La figure 1 représente schématiquement un ensemble de données classées selon deux classes séparées par la surface quadratique ;
- La figure 2 représente le diagramme fonctionnel du procédé selon l'invention ; et
- La figure 3 représente un exemple de surface séparatrice affinée peu à peu au cours de l'apprentissage.

Exposé de modes de réalisation de l'invention

L'invention concerne un procédé qui permet d'apprendre à un neurone à classer des données selon deux classes différentes séparées par une surface quadratique.

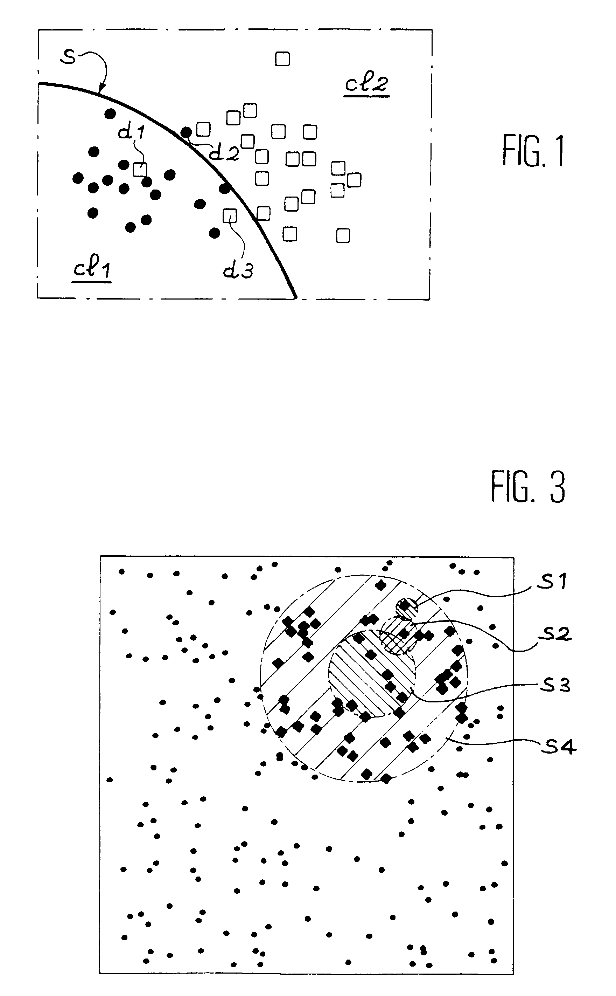

On a représenté sur la figure 1, une pluralité de données classées selon deux classes, appelées Cl1 et Cl2. Ces deux classes sont séparées par la surface séparatrice S. La surface séparatrice S représentée sur cette figure 1 est une surface courbe réalisée, conformément à l'invention.

Comme on le voit dans l'exemple montré sur cette figure, la grande majorité des données, représentées par des carrés vides ou par des ronds pleins, sont correctement classées. Seules, trois données d1, d2 et d3 sont mal classées. C'est ce nombre de données de la base de test mal classées, qui permet de déterminer la capacité d'apprentissage de l'algorithme et donc sa performance.

Cette figure 1 montre donc des vecteurs d'entrée de deux types, les ronds pleins et les carrés vides, classés par un neurone quadratique de poids $\vec{w}$.

Le but de l'apprentissage, d'une façon générale, est de trouver les poids synaptiques $w_i$ à partir d'un ensemble de P exemples, de façon à obtenir les sorties désirées. On parle alors d'apprentissage supervisé. Cela correspond à chercher dans l'espace des poids $w_i$ et rayons $r_i$, une surface séparatrice S telle qu'elle sépare les exemples dont la sortie est +1 des exemples dont la sortie est -1.

La surface séparatrice est de la forme :

$$S = \sum_{i=1}^{N}\left[\left(w_i - x_i\right)^2 - r_i^2\right]$$

telle que :

- si $S \geq O$, alors la sortie correspondante au motif d'entrée, ou donnée d'entrée, $(x_1 \ldots, x_i, \ldots, x_N)$, où $x_i$ est la valeur du motif sur la ième entrée, est +1 ;
- si $S < O$ la sortie est -1.

Si le rayon est unique, $r_i = r$ pour tout i, la surface séparatrice est une hypersphère. Le nombre de paramètres à déterminer est alors N + 1. Le procédé s'applique à toute autre forme de surface d'ordre 2, par exemple, une surface hyperellipsoïdale, hyperboloïdale, etc., dont l'espace de recherche des poids est beaucoup plus grand que dans le cas d'une hypersphère.

Une bonne mesure de la qualité de l'apprentissage d'un exemple $\mu$ est sa stabilité $\gamma^{\mu}$ qui est une fonction des poids. Le module de la stabilité $\gamma^{\mu}$ est une mesure de la distance de l'exemple $\mu$ à la surface séparatrice S. Une grande stabilité positive assure une certaine robustesse de la réponse du neurone.

Le procédé de l'invention qui va être décrit s'applique à un neurone.

Ce procédé consiste à apprendre à un neurone à classer des données en deux classes Cl1 et Cl2 séparées par une surface S quadratique. Cet apprentissage se fait au moyen d'une base d'exemples, appelée "base d'apprentissage", qui comporte une pluralité d'exemples, ou motifs, ou encore données, connus et préalablement répertoriés par des experts.

Le neurone reçoit en entrée un motif ("pattern" en terme anglo-saxon) qu'il doit classer ; l'état du neurone, puisque celui-ci est binaire, est, par exemple, 1 ou -1, suivant la classe attribuée au motif, tout autre codage linéaire pouvant être ramené à ce codage. On précise que chaque neurone a un nombre N d'entrées, prédéfini en fonction du problème à traiter, et des paramètres $r_i$ représentatifs des rayons de la surface séparatrice et que chacune des connexions provenant des entrées est caractérisée par un poids $w_i$ (i=1 à N).

L'apprentissage des valeurs des poids $w_i$ et des rayons $r_i$ s'effectue par minimisation d'une fonction coût.

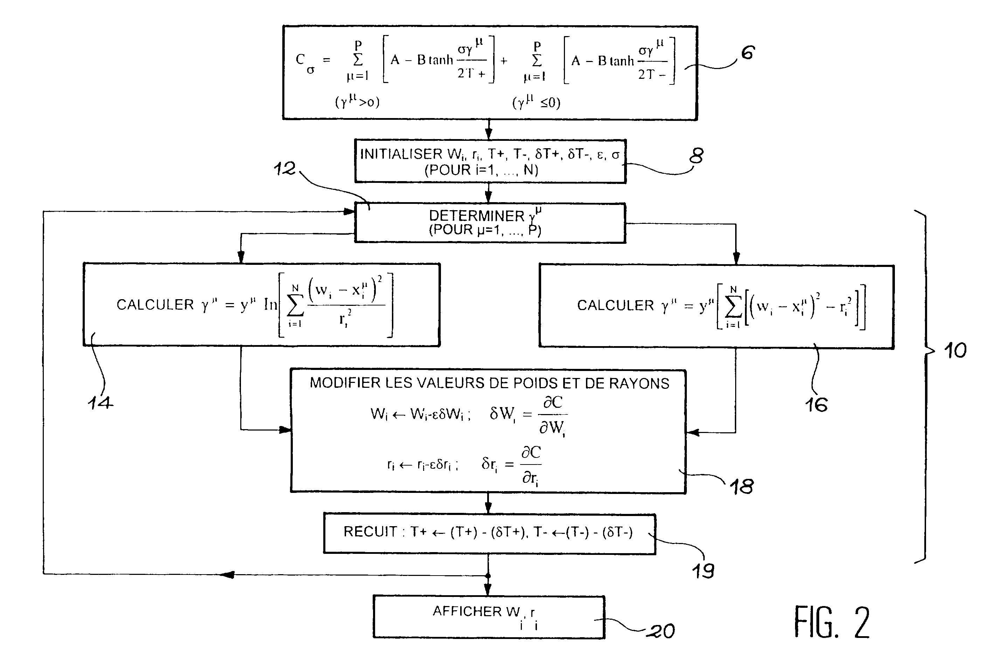

Comme montré sur la figure 2, le procédé d'apprentissage selon l'invention consiste en un procédé de minimisation d'une fonction de coût définie dans l'étape 6. Cette fonction de coût est :

$$C_\sigma = \sum_{\substack{\mu=1 \\ (\gamma^\mu > o)}}^{P} \left[ A - B\tanh\frac{\sigma\gamma^\mu}{2T+} \right] + \sum_{\substack{\mu=1 \\ (\gamma^\mu \leq 0)}}^{P} \left[ A - B\tanh\frac{\sigma\gamma^\mu}{2T-} \right]$$

Le procédé de minimisation de cette fonction de coût commence par une première étape d'initialisation 8 des paramètres du procédé d'apprentissage. En particulier, il consiste à initialiser les paramètres $\sigma$, T+ et T-, les poids $w_i$, et les paramètres de rayon $r_i$. Parmi ces paramètres, on trouve également le taux d'apprentissage $\varepsilon$ et les vitesses de refroidissement, appelées vitesses de recuit et qui sont les valeurs de $\delta T+$ et $\delta T-$ de décrémentation des températures T+ et T-, à chaque itération.

Il comporte ensuite une étape 10 de minimisation par itérations de la fonction coût.

Chaque itération de cette étape de minimisation 10 comporte une première sous-étape 12 qui consiste à déterminer la stabilité $\gamma^\mu$ de chaque motif de la base d'apprentissage et ce, pour les valeurs des poids et des paramètres de rayon du neurone pris à chaque itération.

La stabilité de ce motif est calculée aux étapes 14 ou 16, à partir des expressions :

$$\gamma^\mu = y^\mu \ln\left[ \sum_{i=1}^{N} \frac{\left(w_i - x_i^\mu\right)^2}{r_i^2} \right].$$

Avantageusement on peut aussi utiliser la définition suivante :

$$\gamma^\mu = y^\mu \left[ \sum_{i=1}^{N} \left[ \left(W_i - x_i^\mu\right)^2 - r_i^2 \right] \right]$$

où $\mu$ est l'étiquette du motif, $x_i^\mu$ est la valeur du motif $\mu$ pour la ième entrée, $y^\mu$ est la classe du motif $\mu$ avec $\mu$ allant de 1 à P (P étant le nombre de motifs de la base d'apprentissage), N est le nombre d'entrées et de connexions du neurone, $w_i$ est le poids de la connexion entre l'entrée i et le neurone et $r_i$ est le paramètre de rayon.

Quelle que soit la façon de calculer les stabilités $\gamma^\mu$, l'étape suivante du procédé (étape 18) consiste à utiliser la fonction de coût pour modifier les poids et rayon afin de faire décroître la fonction de coût jusqu'à un minimum ; cette fonction coût C est donnée par l'expression :

$$C_\sigma = \sum_{\substack{\mu=1 \\ (\gamma^\mu > o)}}^{P} \left[ A - B\tanh\frac{\sigma\gamma^\mu}{2T+} \right] + \sum_{\substack{\mu=1 \\ (\gamma^\mu \leq 0)}}^{P} \left[ A - B\tanh\frac{\sigma\gamma^\mu}{2T-} \right]$$

où A est quelconque, B est un réel positif quelconque, P est le nombre de données de la base d'apprentissage, $\gamma^\mu$ est la stabilité de la donnée $\mu$, T+ et T- sont deux paramètres de la fonction coût (appelés « températures »), et $\sigma$ est une variable qui peut prendre la valeur +1 ou la valeur -1 : lorsque $\sigma$ = +1 les motifs de classe positive sont à l'extérieur de

EP 0 929 867 B1

la surface d'ordre 2 et lorsque σ = -1 c'est l'inverse, c'est-à-dire que les motifs de la classe positive sont à l'intérieur de la surface d'ordre 2.

Cette fonction coût est lentement variable pour les stabilités à grande valeur absolue et rapidement variable pour les stabilités proches de zéro. La région de variation rapide de cette fonction est contrôlée par deux paramètres, appelés "température", et notés T+ et T-, avec T+ pour les stabilités positives et T- pour les stabilités négatives, T+ ≤ T-.

La stabilité d'un motif correctement appris par le neurone est positive ; au contraire, la stabilité d'un motif mal appris est négative.

Le module de la stabilité est une fonction monotone croissante de la distance entre le motif et la surface séparatrice S définie par les poids et le(s) rayon(s) du neurone.

Le but de l'invention est donc de proposer un algorithme permettant d'obtenir le plus de motifs à stabilité positive, ce qui correspond à la meilleure qualité d'apprentissage possible.

Le procédé selon l'invention consiste à minimiser la fonction coût C. Cette minimisation se fait de façon itérative, par gradient simple dans lequel, à chaque itération, les valeurs T+ et T-décroissent respectivement de δT+ et δT- jusqu'à arriver au critère d'arrêt prédéfini (étape 19). Ce critère d'arrêt peut être un critère d'arrêt classique, tel que la dérive de la fonction coût ait une valeur absolue inférieure à un petit nombre appelé degré de tolérance dans la détermination du minimum. L'itération est schématisée, sur la figure 2, par une flèche de retour vers l'étape 12.

Lorsque le critère d'arrêt est satisfait, les valeurs des $w_i$ et $r_i$ sont affichées sur un écran et enregistrées dans un fichier en vue d'une utilisation ultérieure. Ceci est représenté par l'étape 20 sur la figure 2.

On a ainsi déterminé les paramètres (poids des connexions et rayons) descriptifs de la surface séparatrice. La surface séparatrice est donc créée. Ainsi, lorsque tous les exemples de la base d'apprentissage ont été traités et ont donné un taux d'erreur minimal, on traite ensuite des cas inconnus par le réseau de neurones ainsi formé, en considérant que si le taux d'erreur obtenu pour les exemples de la base d'apprentissage est bon, alors le classement de motifs inconnus sera effectué correctement.

Sur la figure 3, on a représenté schématiquement différents stades de détermination d'une surface séparatrice d'ordre 2 à rayon unique, déterminée par le procédé de l'invention dans un cas où les entrées sont de dimensions N = 2 ; la surface est alors un cercle.

Plus précisément, les points pleins et les points vides montrés sur la figure 3, représentent chacun une donnée de l'ensemble d'apprentissage. Le procédé cherche à déterminer la surface séparatrice S4 permettant de séparer les ronds des carrés. Chaque cercle représente la surface séparatrice à une itération différente ; la surface est affinée au fur et à mesure du procédé. Ainsi, la surface S1 représente la première surface déterminée lors des toutes premières itérations du procédé ; la surface S2 montre la surface de séparation déterminée après quelques itérations supplémentaires. La surface S3 est celle déterminée après de nouvelles itérations.

Enfin, la surface S4 est obtenue et sépare tout à fait les carrés des ronds. La surface finale étant trouvée, le procédé, tel que décrit précédemment, s'arrête.

**Revendications**

1. Procédé pour apprendre à un neurone à fonction d'activation quadratique à classer des données selon deux classes distinctes (cl1, cl2) séparées par une surface séparatrice (S), ce neurone étant un neurone binaire ayant N connexions en provenance d'une entrée et recevant en entrée N nombre représentant une donnée destinée à être classée en utilisant une base d'apprentissage contenant une pluralité de données connues, chaque entrée du neurone étant affectée par un poids ($w_i$) de la connexion correspondante,
caractérisé en ce qu'il comporte les étapes suivantes :

a) définition d'une fonction coût ($C_\sigma$) en déterminant, en fonction d'un paramètre descriptif de la surface séparatrice, une stabilité ($\gamma^\mu$) de chaque donnée ($\mu$) de la base d'apprentissage, la fonction coût étant la somme de tous les coûts déterminés pour toutes les données de la base d'apprentissage avec :

$$C_\sigma = \sum_{\mu=1}^{P}\left[A - B\tanh\frac{\sigma\gamma^\mu}{2T+}\right] + \sum_{\mu=1}^{P}\left[A - B\tanh\frac{\sigma\gamma^\mu}{2T-}\right]$$
$$(\gamma^\mu > 0) \qquad\qquad (\gamma^\mu \leq 0)$$

6

où A est quelconque, B est un réel positif quelconque, P est le nombre de données de la base d'apprentissage, $\gamma^\mu$ est la stabilité de la donnée $\mu$, et T+, T- et $\sigma$ sont deux paramètres de la fonction coût ;

b) initialisation des poids ($w_i$), des rayons ($r_i$), des paramètres (T+ et T-, avec T+ < T-) d'un taux d'apprentissage ($\varepsilon$) et de vitesses de recuit ($\delta$T+ et $\delta$T-) ;

c) minimisation, par rapport aux poids des connexions ($w_i$) et aux rayons ($r_i$), de la fonction coût ($C\sigma$) par itérations successives au cours desquelles les paramètres (T+ et T-) décroissent suivant les vitesses de recuit ($\delta$T+ et $\delta$T-) jusqu'à un critère d'arrêt prédéfini ;

d) obtention des valeurs des poids des connexions et des rayons du neurone.

2.  Procédé selon la revendication 1, caractérisé en ce que la stabilité de chaque donnée est :

$$\gamma^\mu = y^\mu \ln\left[\sum_{i=1}^{N} \frac{(w_i - x^\mu{}_i)^2}{r_i^2}\right],$$

avec y = +1 ou -1, et

où $\mu$ est l'étiquette du motif, $x^\mu{}_i$ est la valeur du motif $\mu$ pour la ième entrée, $y^\mu$ est la classe du motif $\mu$, N est le nombre d'entrées et de connexions du neurone, $w_i$ est le poids de la connexion entre l'entrée i et le neurone et $r_i$ le paramètre de rayon pour la i-ème entrée.

3.  Procédé selon la revendication 1, caractérisé en ce que la stabilité de chaque donnée est :

$$\gamma^\mu = y^\mu \left[\sum_{i=1}^{N}\left[\left(W_i - x_i^\mu\right)^2 - r_i^2\right]\right]$$

avec y = +1 ou -1, et

où $\mu$ est l'étiquette du motif, $x^\mu{}_i$ est la valeur du motif $\mu$ pour la ième entrée, $y^\mu$ est la classe du motif $\mu$, N est le nombre d'entrées et de connexions du neurone, $w_i$ est le poids de la connexion entre l'entrée i et le neurone et $r_i$ est le paramètre de rayon pour la i-ème entrée.

**Patentansprüche**

1.  Lernverfahren für ein Neuron mit quadratischer Aktivierungsfunktion zur Klassierung von durch eine Trennfläche (S) getrennten Daten nach zwei verschiedenen Klassen (c11, c12), wobei dieses Neuron ein binäres Neuron mit N aus einem Eingang kommenden Verbindungen ist und als Eingang N Zahlen erhält, die eine Größe repräsentieren, die dazu bestimmt ist, klassifiziert zu werden, indem eine Lernbasis benutzt wird, die eine Vielzahl bekannter Größen enthält, wobei jedem Eingang des Neurons eine Wertigkeit bzw. Gewichtung ($w_i$) der entsprechenden Verbindung zugeteilt wird, **dadurch gekennzeichnet,** dass es die folgenden Schritte umfasst:

a) Definition einer Kostenfunktion ($C_\sigma$), indem in Abhängigkeit von einem beschreibenden Parameter der Trennfläche eine Stabilität ($\gamma^\mu$) jeder Größe ($\mu$) der Lernbasis festgelegt wird, wobei die Kostenfunktion die Summe aller Kosten ist, festgelegt für alle Größen der Lernbasis durch:

$$C_\sigma = \sum_{\mu=1}^{P} \left[ A - B\tanh\frac{\sigma\gamma^\mu}{2T+} \right] \div \sum_{\mu=1}^{P} \cdot \left[ A - B\tanh\frac{\sigma\gamma^\mu}{2T-} \right]$$

$$(\gamma^\mu > o) \qquad\qquad (\gamma^\mu \le 0)$$

wo A beliebig ist, B eine beliebige positive reelle Zahl ist, P die Anzahl der Größen der Lernbasis ist, $\gamma^\mu$ die Stabilität der Größe $\mu$ ist und T+, T- und $\sigma$ zwei Parameter der Kostenfunktion sind;

b) Initialisierung der Gewichtungen ($w_i$), der Radien ($r_i$), der Parameter (T+ und T-, mit T+ < T-) mit einer Lernquote bzw. -rate ($\varepsilon$) und Tempergeschwindigkeiten ($\delta T+$ und $\delta T-$);

c) Minimalisierung der Kostenfunktion ($C_\sigma$) in Bezug auf die Gewichtungen der Verbindungen ($w_i$) und der Radien ($r_i$) durch sukzessive Iterationen, in deren Verlauf die Parameter (T+ und T-) entsprechend den Tempergeschwindigkeiten ($\delta T+$ und $\delta T-$) bis zu einem vorher festgelegten Stopp-Kriterium abnehmen;

d) Erlangung der Werte der Gewichtungen der Verbindungen und der Radien des Neurons.

2. Verfahren nach Anspruch 1, dadurch gekennzeichnet, dass die Stabilität jeder Größe folgendermaßen ist:

$$\gamma^\mu = y^\mu \ln\left[ \sum_{i=1}^{N} \frac{(w_i - x^\mu_i)^2}{r_i^2} \right]$$

mit y = +1 oder -1, und

wo $\mu$ das Etikett des Musters ist, $x^\mu_i$ der Wert des Musters $\mu$ für den i-ten Eingang ist, $y^\mu$ die Klasse des Musters $\mu$ ist, N die Anzahl der Eingänge und der Verbindungen des Neurons ist, $w_i$ die Gewichtung der Verbindung zwischen dem Eingang i und dem Neuron ist und $r_i$ der Parameter des Radius für den i-ten Eingang ist.

3. Verfahren nach Anspruch 1, dadurch gekennzeichnet, dass die Stabilität jeder Größe folgendermaßen ist:

$$\gamma^\mu = y^\mu \left[ \sum_{i=1}^{N} [(w_i - x_i^\mu)^2 - r_i^2] \right]$$

mit y = +1 oder -1, und

wo $\mu$ das Etikett des Musters ist, $x^\mu_i$ der Wert des Musters $\mu$ für den i-ten Eingang ist, $y^\mu$ die Klasse des Musters $\mu$ ist, N die Anzahl der Eingänge und der Verbindungen des Neurons ist, $w_i$ die Gewichtung der Verbindung zwischen dem Eingang i und dem Neuron ist und $r_i$ der Parameter des Radius für den i-ten Eingang ist.

**Claims**

1. A method for teaching a neurone with a quadratic activation function to classify data according to two distinct classes (c11, c12) separated by a separating surface (S), this neurone being a binary neurone having N connections coming from an input and receiving as an input N numbers representing a data item intended to be classified using a learning base containing a plurality of known data, each input of the neurone being affected by a weight ($w_i$) of the corresponding connection,

characterised in that it includes the following steps:

a) defining a cost function ($C_\sigma$) by determining, as a function of a parameter describing the separating surface,

a stability ($\gamma^\mu$) of each data item ($\mu$) of the learning base, the cost function being the sum of all the costs determined for all the data in the learning base with:

$$C_\sigma = \sum_{\mu=1}^{P} \left[ A - B\tanh\frac{\sigma\gamma^\mu}{2T+} \right] + \sum_{\mu=1}^{P} \left[ A - B\tanh\frac{\sigma\gamma^\mu}{2T-} \right]$$

$$(\gamma^\mu > o) \qquad\qquad (\gamma^\mu \leq 0)$$

where A is any value, B is any positive real number, P is the number of data items in the learning base, $\gamma^\mu$ is the stability of the data item $\mu$, and T+, T- and $\sigma$ are two parameters of the cost function;

b) initialising the weights ($w_i$), the radii ($r_i$), the parameters (T+ and T-, with T+ < T-), a learning rate $\varepsilon$ and speeds of the temperature decreasing ($\delta$T+ and $\delta$T-);

c) minimising, with respect to the weight of the connections ($W_i$) and the radii ($r_i$), the cost function ($C_\sigma$) by successive iterations during which the parameters (T+ and T-) decrease at speeds of the temperature decreasing ($\delta$T+ and $\delta$T-) as far as a predefined stop criterion;

d) obtaining values of the weights of the connections and the radii of the neurone.

2. A method according to Claim 1, characterised in that the stability of each data item is:

$$\gamma^\mu = y^\mu \ln\left[ \sum_{i=1}^{N} \frac{(w_i - x^\mu_i)^2}{r_i^2} \right],$$

with y = +1 or -1, and

where $\mu$ is the label of the pattern, $x^\mu_i$ is the value of the pattern $\mu$ for the $i^{th}$ input, $y^\mu$ is the class of the pattern $\mu$, N is the number of inputs and connections of the neurone, $w_i$ is the weight of the connection between the input i and the neurone and $r_j$ the radius parameter for the $i^{th}$ input.

3. A method according to Claim 1, characterised in that the stability of each data item is

$$\gamma^\mu = y^\mu \left[ \sum_{i=1}^{N} [(w_i - x^\mu_i)^2 - r_i^2] \right]$$

with y = +1 or -1, and

where $\mu$ is the label of the pattern, $x^\mu_i$ is the value of the pattern $\mu$ for the $i^{th}$ input, $y^\mu$ is the class of the pattern $\mu$, N is the number of inputs and connections of the neurone, $w_i$ is the weight of the connection between the input i and the neurone and $r_i$ is the radius parameter for the $i^{th}$ input.

FIG. 1

FIG. 3

$$C_\sigma = \sum_{\substack{\mu=1}}^{P} \left[ A - B \tanh \frac{\sigma \gamma^\mu}{2T+} \right] + \sum_{\substack{\mu=1}}^{P} \left[ A - B \tanh \frac{\sigma \gamma^\mu}{2T-} \right]$$

$(\gamma^\mu > o)$         $(\gamma^\mu \leq 0)$    6

INITIALISER $W_i$, $r_i$, T+, T-, $\delta$T+, $\delta$T-, $\epsilon$, $\sigma$
(POUR i=1, ..., N)    8

12

DETERMINER $\gamma^\mu$
(POUR $\mu$=1, ..., P)    10

CALCULER $\gamma'' = y^\mu \ln\left[ \sum_{i=1}^{N} \frac{\left(w_i - x_i^\mu\right)^2}{r_i^2} \right]$

14

CALCULER $\gamma'' = y^\mu \left[ \sum_{i=1}^{N}\left[ \left(w_i - x_i^\mu\right)^2 - r_i^2 \right] \right]$

16

MODIFIER LES VALEURS DE POIDS ET DE RAYONS

$W_i \leftarrow W_i - \epsilon\delta W_i$ ;    $\delta W_i = \dfrac{\partial C}{\partial W_i}$

$r_i \leftarrow r_i - \epsilon\delta r_i$ ;    $\delta r_i = \dfrac{\partial C}{\partial r_i}$

18

RECUIT : T+ ← (T+) - ($\delta$T+), T- ←(T-) - ($\delta$T-)    19

AFFICHER $W_i$, $r_i$    20

FIG. 2